# FASCICULE DE BREVET EUROPEEN

(11) **EP 2 676 278 B1**
(45) Date de publication et mention de la délivrance du brevet: **14.10.2015**
(21) Numéro de dépôt: 12704289.3
(22) Date de dépôt: 17.02.2012
(51) Int. Cl.: G21C 19/11, G21C 19/10, G21C 19/19, G21C 19/32, G21F 5/14, G21C 3/334, G21C 3/335

(54) **Dispositif de retournement d'un conteneur, notamment pour assemblage de combustible nucléaire, ensemble de retournement et centrale nucléaire**
Vorrichtung zum Drehen eines Behälters, insbesondere für Kernbrennstabbündel, Drehanordnung und Kernkraftwerk
Device for turning a container, particularly for nuclear fuel assemblies, turning assembly, and nuclear power plant

(30) Priorité: 18.02.2011 FR 1151369
(43) Date de publication de la demande: 25.12.2013
(73) Titulaire: AREVA NP, 92400 Courbevoie (FR)
(72) Inventeur: BRESOUS, Luc, F-42510 Bussieres (FR)
(74) Mandataire: Domenego, Bertrand
(86) Numéro de dépôt international: PCT/EP2012/052796
(87) Numéro de publication internationale: WO 2012/110645

(56) Documents cités:
- EP-A1- 0 529 431
- FR-A1- 2 666 680
- US-A- 3 894 327
- US-A- 5 043 132
- US-A1- 2006 283 611

## Description

La présente invention concerne un dispositif de retournement d'un conteneur autour d'un axe de retournement, du type comprenant un organe de support fixe, deux organes d'appui espacés suivant l'axe de retournement de part et d'autre d'un espace de réception du conteneur et propres à servir d'appui au conteneur tout en permettant la rotation du conteneur par rapport aux organes d'appui autour de l'axe de retournement.

Un assemblage de combustible nucléaire pour réacteur à eau sous pression (« PWR » pour « Pressurized Water Reactor » en anglais) comprend généralement un faisceau de crayons de combustible nucléaire de grande longueur disposés parallèlement les uns aux autres et une armature de maintien des crayons comprenant un embout inférieur, un embout supérieur, des tubes-guides se substituant à certains crayons du faisceau et reliant entre eux l'embout inférieur et l'embout supérieur, et des grilles entretoises fixées aux tubes-guides et réparties entre l'embout inférieur et l'embout supérieur. Les crayons sont maintenus transversalement et longitudinalement par les grilles entretoises.

L'assemblage de combustible nucléaire présente une forme allongée et une longueur de l'ordre de plusieurs mètres, typiquement environ quatre mètres, pour une masse de plusieurs centaines de kilogrammes, typiquement de l'ordre de 600 à 800 kg. Il en résulte que les opérations de manutention des assemblages de combustible nucléaire sont souvent délicates.

En vue de son utilisation, l'assemblage de combustible nucléaire est disposé verticalement dans un coeur de réacteur nucléaire, l'embout inférieur étant disposé en bas et l'embout supérieur en haut.

En fonctionnement, il est possible qu'un crayon de l'assemblage de combustible nucléaire ou l'armature de maintien soit endommagé et doive être remplacé. Par ailleurs, des crayons de combustible sont régulièrement extraits à des fins d'examens en laboratoire ou pour réinsertion dans le faisceau de crayons d'un autre assemblage de combustible à des fins expérimentales.

Les assemblages de combustible nucléaire sont généralement prévus afin de pouvoir extraire chaque crayon de l'armature après démontage de l'un des embouts. En général, l'extraction du crayon se fait par le haut après démontage de l'embout supérieur. Dans certains cas, par exemple lorsqu'il y a rupture d'un crayon de combustible et qu'il faut extraire les deux morceaux ou lorsque la totalité des crayons doit être transférée d'une armature endommagée à une armature neuve, il peut être nécessaire de réaliser l'extraction par le bas de l'assemblage après démontage de l'embout inférieur. Dans ce cas, il est nécessaire de retourner préalablement l'assemblage de combustible nucléaire. Toutes ces opérations se font sous eau pour éviter les expositions aux radiations.

FR 2 666 680 divulgue un ensemble de retournement comprenant un conteneur d'assemblage de combustible nucléaire, aussi nommé « alvéole », et un dispositif de retournement du conteneur. Le conteneur comprend deux tourillons coaxiaux prévus sur deux faces opposées du conteneur. Le dispositif de retournement comprend un palonnier propre à être suspendu à un pont roulant, le palonnier comprenant deux colonnes espacées de façon à pouvoir recevoir entre elles le conteneur, et deux organes d'appui disposés aux extrémités inférieures des colonnes et propres à servir d'appui aux tourillons du conteneur tout en permettant la rotation du conteneur autour d'un axe de retournement horizontal, le dispositif de retournement comprenant en outre un bras d'entraînement monté rotatif sur le palonnier autour de l'axe de retournement pour entraîner le conteneur, en appui sur les organes d'appui, en rotation autour de l'axe de retournement.

Néanmoins, cet ensemble de retournement nécessite l'utilisation d'un pont roulant pour suspendre le palonnier. Le pont roulant ainsi monopolisé n'est plus disponible pour effectuer d'autres opérations, par exemple des opérations de chargement/déchargement d'assemblages de combustible nucléaire dans le coeur du réacteur.

En outre les opérations de retournement utilisant le palonnier suspendu au pont roulant sont effectuées dans une piscine de maintenance au-dessus de cellules de stockage temporaire d'assemblages de combustible nucléaire. Ces cellules doivent donc être vidées pour des raisons de sûreté, ce qui nécessite d'effectuer des déplacements d'assemblages de combustible nucléaire coûteux en temps avant de pouvoir retourner l'assemblage de combustible nucléaire sur lequel des réparations et/ou des remplacements de crayons et/ou de l'armature de maintien doivent être effectués.

Un but de l'invention est de proposer un dispositif de retournement pouvant être intégré facilement dans une centrale nucléaire, qui soit compact et facile d'utilisation.

A cet effet, l'invention propose un dispositif de retournement du type précité, caractérisé en ce qu'il comprend un organe de support mobile monté rotatif sur l'organe de support fixe autour de l'axe de retournement, au moins un organe d'appui étant porté par l'organe de support mobile en étant monté rotatif autour de l'axe d'entraînement sur l'organe de support mobile, le ou chaque organe d'appui porté par l'organe de support mobile restant immobile en rotation autour de l'axe de retournement par rapport à l'organe de support fixe lors de la rotation de l'organe de support mobile autour de l'axe de retournement par rapport à l'organe de support fixe.

Selon d'autres modes de réalisation, le dispositif de retournement comprend une ou plusieurs des caractéristiques suivantes, prises isolément ou selon toutes les combinaisons techniquement possibles :
- le dispositif de retournement comprend un mécanisme d'immobilisation propre à maintenir le ou chaque organe d'appui monté sur l'organe de support mobile immobile en rotation autour de l'axe de retournement lors de la rotation de l'organe de support mobile autour de l'axe de retournement par rapport à l'organe de support fixe ;
- le mécanisme d'immobilisation est porté au moins en partie par l'organe de support mobile ;
- le mécanisme d'immobilisation comprend un arbre de synchronisation monté rotatif sur l'organe de support mobile autour d'un axe de synchronisation parallèle à l'axe de retournement, l'arbre de synchronisation étant entraîné en révolution circulaire autour de l'axe de retournement du fait de la rotation de l'organe de support mobile et entraîné en rotation autour de son axe par une liaison mécanique avec chaque organe d'appui ;
- chaque liaison mécanique comprend un engrenage de synchronisation comprenant une roue planétaire d'axe l'axe de retournement solidaire en rotation de l'organe d'appui et une roue satellite, les roues satellites des deux engrenages de synchronisation étant liées en rotation par l'arbre de synchronisation ;
- la roue satellite de chaque engrenage de synchronisation est montée sur l'arbre de synchronisation et solidaire en rotation de l'arbre de synchronisation ;
- l'organe de support mobile est rotatif par rapport à l'organe de support fixe autour de l'axe de retournement sur 360° ;
- l'organe de support mobile porte un organe d'appui en porte-à-faux par rapport à l'autre organe d'appui, l'autre organe d'appui étant situé entre l'organe d'appui porté en porte-à-faux par l'organe de support mobile et l'organe de support fixe ;
- l'organe de support mobile comprend une partie proximale et une partie distale espacées suivant l'axe de retournement et situées de part et d'autre de l'espace de réception, la partie proximale est montée rotative sur l'organe de support fixe autour de l'axe d'entraînement, et la partie distale est en porte-à-faux et porte l'organe d'appui ;
- un organe d'appui est fixé sur l'organe de support fixe ;
- l'organe de support fixe comprend un arbre de support fixe s'étendant suivant l'axe de retournement, un organe d'appui étant fixé à une extrémité de l'arbre de support fixe ;
- l'organe de support mobile est monté rotatif sur l'arbre de support ;
- le dispositif de retournement comprend au moins un bras d'entraînement en rotation d'un conteneur reçu en appui sur les organes d'appui, solidaire de l'organe de support mobile ;
- le dispositif de retournement est propre à retourner un conteneur d'assemblage de combustible nucléaire ; et
- le dispositif de retournement est propre à fonctionner sous eau.

L'invention concerne également un ensemble de retournement comprenant un conteneur d'assemblage de combustible nucléaire et un dispositif de retournement du conteneur tel que défini ci-dessus et une centrale nucléaire de production d'énergie comprenant un ensemble de retournement tel que défini ci-dessus.

L'invention et ses avantages seront mieux compris à la lecture de la description qui va suivre, donnée uniquement à titre d'exemple non limitatif, et faite en référence aux dessins annexés, sur lesquels :
- les figures 1 et 2 sont des vues en perspective d'un ensemble de retournement conforme à l'invention comprenant un conteneur et un dispositif de retournement du conteneur, respectivement avant et après insertion du conteneur dans le dispositif de retournement ;
- la figure 3 est une vue en coupe selon le plan III sur la figure 1 du dispositif de retournement de la figure 1 ;
- les figures 4 et 5 sont des vues en perspective partielles du dispositif de retournement de la figure 1 suivant deux directions d'observation différentes ; et
- les figures 6 à 8 sont des vues en perspective du dispositif de retournement de la figure 1 seul, dans trois positions successives lors du retournement d'un conteneur ;

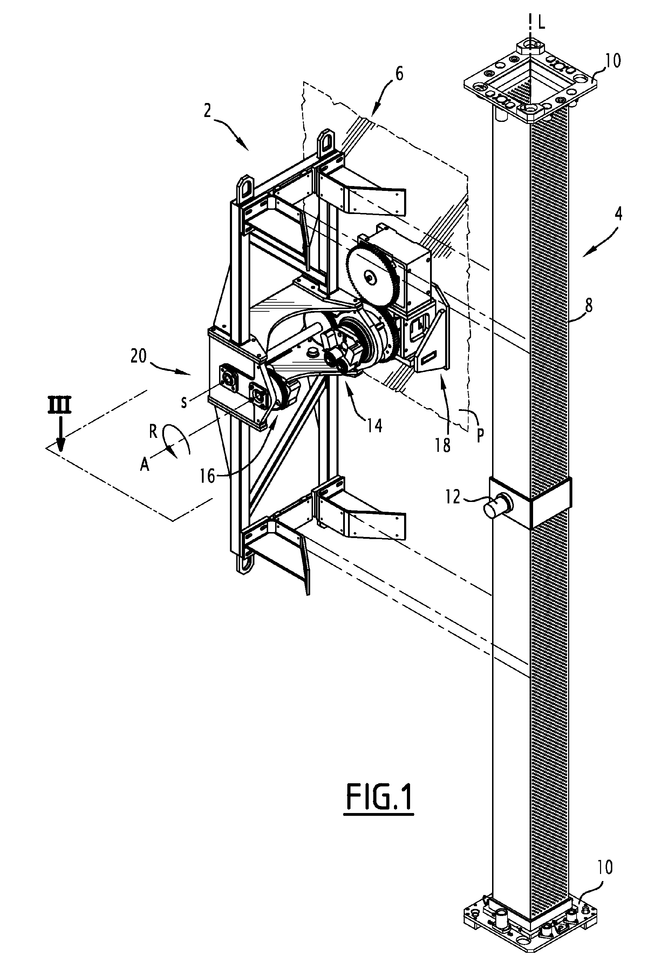

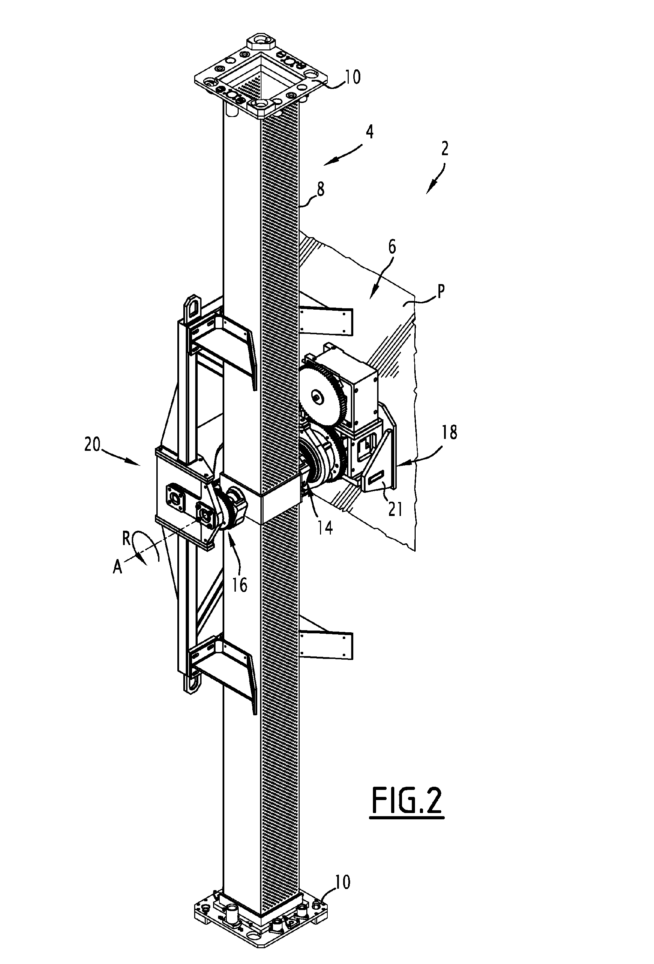

L'ensemble de retournement 2 illustré sur les figures 1 et 2 comprend un conteneur 4 propre à recevoir un assemblage de combustible nucléaire (non représenté) et un dispositif de retournement 6 permettant de retourner le conteneur 4 autour d'un axe de retournement A horizontal.

Un assemblage de combustible nucléaire comprend typiquement un faisceau de crayons de combustible nucléaire de grande longueur disposés parallèlement les uns aux autres et une armature de maintien des crayons comprenant un embout inférieur, un embout supérieur, des tubes-guides se substituant à certains crayons du faisceau et reliant entre eux l'embout inférieur et l'embout supérieur, et des grilles entretoises fixées aux tubes-guides et réparties entre l'embout inférieur et l'embout supérieur. Les crayons sont maintenus transversalement et longitudinalement par les grilles entretoises. L'assemblage de combustible nucléaire présente une forme allongée, et une longueur de plusieurs mètres, typiquement environ quatre mètres, pour une masse de plusieurs centaines de kilogrammes, typiquement de l'ordre de 600 à 800 kg.

Le conteneur 4 comprend une enveloppe 8 tubulaire allongée suivant un axe longitudinal L. L'enveloppe 8 délimite intérieurement un logement de réception d'un assemblage de combustible nucléaire. L'enveloppe 8 est ouverte à ses deux extrémités longitudinales.

Le conteneur 4 comprend deux embases 10 chacune disposée à une extrémité longitudinale respective de l'enveloppe 8. Chaque embase 10 est propre à permettre le maintien, à l'intérieur de l'enveloppe 8, de l'assemblage de combustible nucléaire reçu dans l'enveloppe 8.

Le conteneur 4 comprend deux tourillons 12 coaxiaux (un seul étant visible sur la figure 1) disposés de part et d'autre de l'enveloppe 8 sur la surface extérieure de l'enveloppe 8.

Les tourillons 12 sont disposés sensiblement à mi-distance entre les extrémités longitudinale de l'enveloppe 8, de façon que l'axe des tourillons 12 passe sensiblement par ou à proximité du centre de gravité du conteneur 4 chargé d'un assemblage de combustible nucléaire.

Le dispositif de retournement 6 est propre à recevoir le conteneur 4, à supporter le conteneur 4 par ses tourillons 12 et à retourner le conteneur 4 autour de l'axe de retournement A (flèche R sur les figures 1 et 2). L'axe de retournement A coïncide avec l'axe des tourillons 12 lorsque le conteneur 4 est en appui sur le dispositif de retournement 6 (figure 2). Le dispositif de retournement 6 est dimensionné pour supporter et retourner un conteneur 4 chargé d'un assemblage de combustible nucléaire, et permet bien entendu de supporter et de retourner le conteneur vide.

Le dispositif de retournement 6 comprend un premier organe d'appui 14 et un deuxième organe d'appui 16 propres à servir d'appui simple aux tourillons 12 du conteneur 4 tout en permettant la rotation libre du conteneur 4 autour de l'axe de retournement A.

Le premier organe d'appui 14 et le deuxième organe d'appui 16 sont alignés suivant l'axe de retournement A et espacés l'un de l'autre suivant l'axe de retournement A. Le premier organe d'appui 14 et le deuxième organe d'appui 16 délimitent entre eux un espace de réception du conteneur 4.

Le conteneur 4 est insérable en position verticale entre le premier organe d'appui 14 et le deuxième organe d'appui 16 de manière à être simplement posé en appui par ses tourillons 12 sur le premier organe d'appui 14 et le deuxième organe d'appui 16, chaque tourillon venant en appui sur un organe d'appui respectif (figure 2).

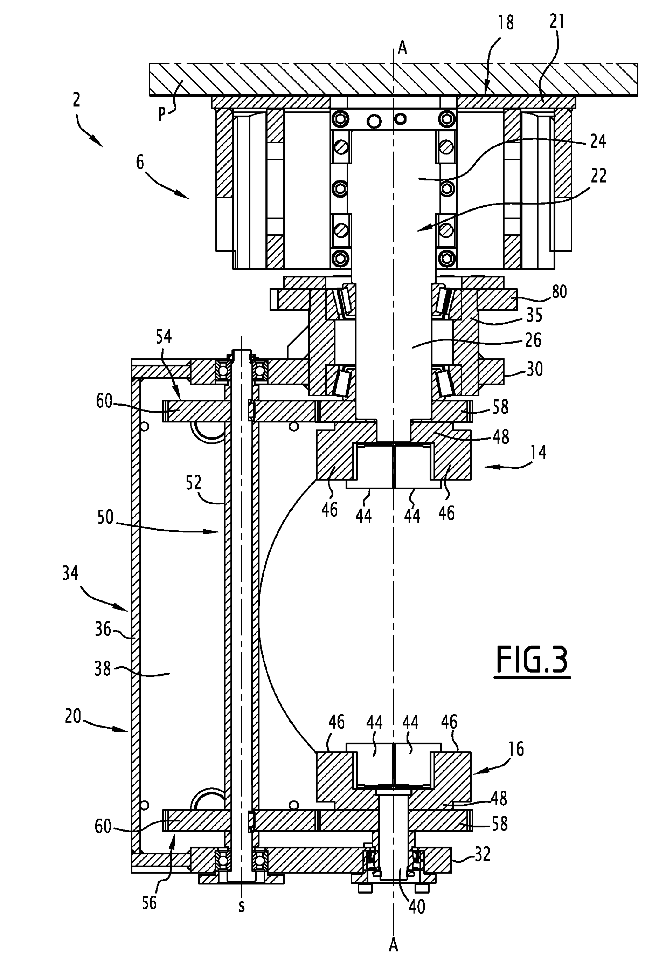

En référence à la figure 3, le dispositif de retournement 6 comprend un organe de support fixe 18 et un organe de support mobile 20.

L'organe de support fixe 18 est fixé sur une paroi latérale P d'une piscine de stockage et de manutention d'assemblages de combustible nucléaire dans une centrale nucléaire.

L'organe de support fixe 18 comprend un châssis 21 et un arbre de support 22 fixe. Le châssis 21 est destiné à être fixé à la paroi latérale P. L'arbre de support 22 est fixé sur le châssis 21 et s'étend suivant l'axe de retournement A. L'arbre de support 22 est fixé en porte-à-faux sur le châssis 21. Il comprend un tronçon proximal 24 encastré dans le châssis 21 et un tronçon distal 26 libre s'étendant en porte-à-faux à partir du tronçon proximal 24.

L'organe de support mobile 20 est porté par l'organe de support fixe 18. Il est monté rotatif autour de l'axe de retournement A sur l'arbre de support 22 de l'organe de support fixe 18. L'organe de support mobile 20 est monté en porte-à-faux sur l'arbre de support 22 de l'organe de support fixe 18.

L'organe de support mobile 20 comprend une partie proximale 30 et une partie distale 32 espacées suivant l'axe de retournement A. Il comprend une partie intermédiaire 34 reliant la partie proximale 30 et la partie distale 32 entre elles. La partie proximale 30 et la partie distale 32 sont situées de part et d'autre de l'espace de réception du conteneur 4.

La partie proximale 30 est montée rotative sur l'organe de support fixe 18 autour de l'axe de retournement A. Plus particulièrement, la partie proximale 30 est montée rotative sur le tronçon distal 26 de l'arbre de support 22. Pour ce faire, elle comprend un manchon 35 tubulaire enfilé sur le tronçon distal 26 de l'arbre de support 22 et monté rotatif sur celui-ci par l'intermédiaire de roulements.

La partie distale 32 et la partie intermédiaire 34 s'étendent en porte-à-faux à partir de la partie proximale 30.

L'organe de support mobile 20 contourne l'espace de réception délimité entre le premier organe d'appui 14 et le deuxième organe d'appui 16. L'organe de support mobile 20, en vue suivant une direction perpendiculaire à l'axe de retournement A, a une forme générale en U dont les branches latérales sont définies par la partie proximale 30 et la partie distale 32, et l'âme est définie par la partie intermédiaire 34.

La partie intermédiaire 34 s'étend entre la partie distale 32 et la partie proximale 30 suivant l'axe de retournement A en étant décalée latéralement par rapport à l'axe de retournement A.

La partie intermédiaire 34 comprend un voile central 36 et deux flasques latéraux 38 situés de part et d'autre du voile central 36 conférant à la partie intermédiaire 34, en vue suivant une direction parallèle à l'axe de retournement A, une section transversale en U ouverte vers l'axe de retournement A.

Chaque flasque latéral 38 présente un bord arqué de façon à dégager l'espace de réception défini entre le premier organe d'appui 14 et le deuxième organe d'appui 16.

Le premier organe d'appui 14 est porté par l'organe de support fixe 18. Le premier organe d'appui 14 est monté fixe sur l'organe de support fixe 18.

Plus particulièrement, le premier organe d'appui 14 est fixé à l'extrémité libre du tronçon distal 26 de l'arbre de support 22.

Le deuxième organe d'appui 16 est porté par l'organe de support mobile 20, en porte-à-faux par rapport à l'organe de support fixe 18. Le deuxième organe d'appui 16 est monté rotatif autour de l'axe de retournement A sur la partie distale 32 de l'organe de support mobile 20.

Plus précisément, le deuxième organe d'appui 16 est fixé sur un pivot 40 s'étendant suivant l'axe de retournement A en direction de la partie proximale 30. Le pivot 40 est monté rotatif par l'intermédiaire de roulements sur la partie distale 32.

Le premier organe d'appui 14 et le deuxième organe d'appui 16 sont situés axialement suivant l'axe de retournement A entre la partie proximale 30 et la partie distale 32 de l'organe de support mobile 20.

Le premier organe d'appui 14 et le deuxième organe d'appui 16 sont identiques et disposés symétriquement par rapport à un plan vertical médian perpendiculaire à l'axe de retournement A.

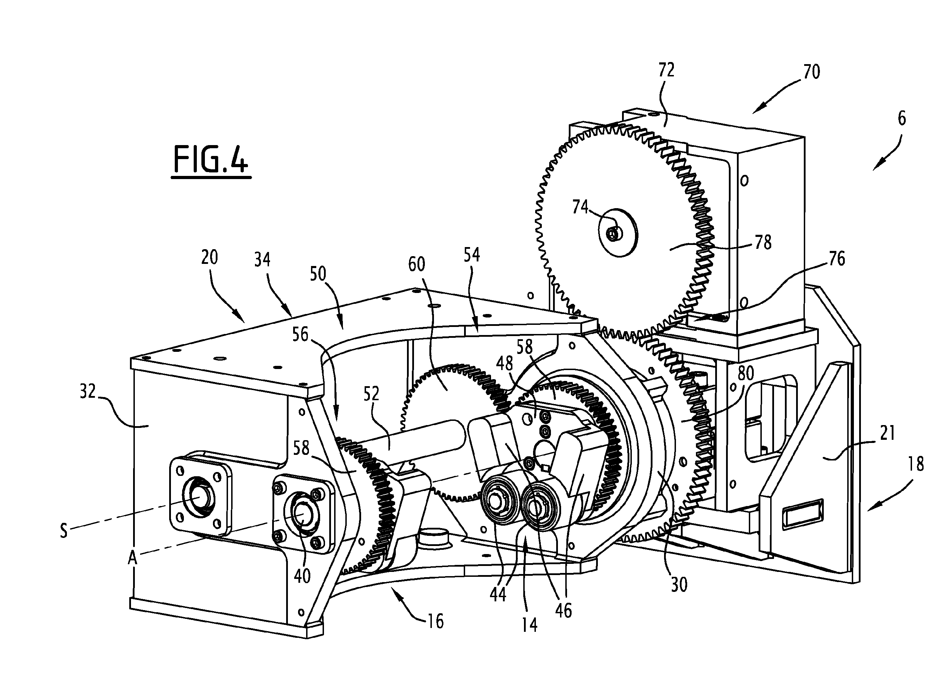

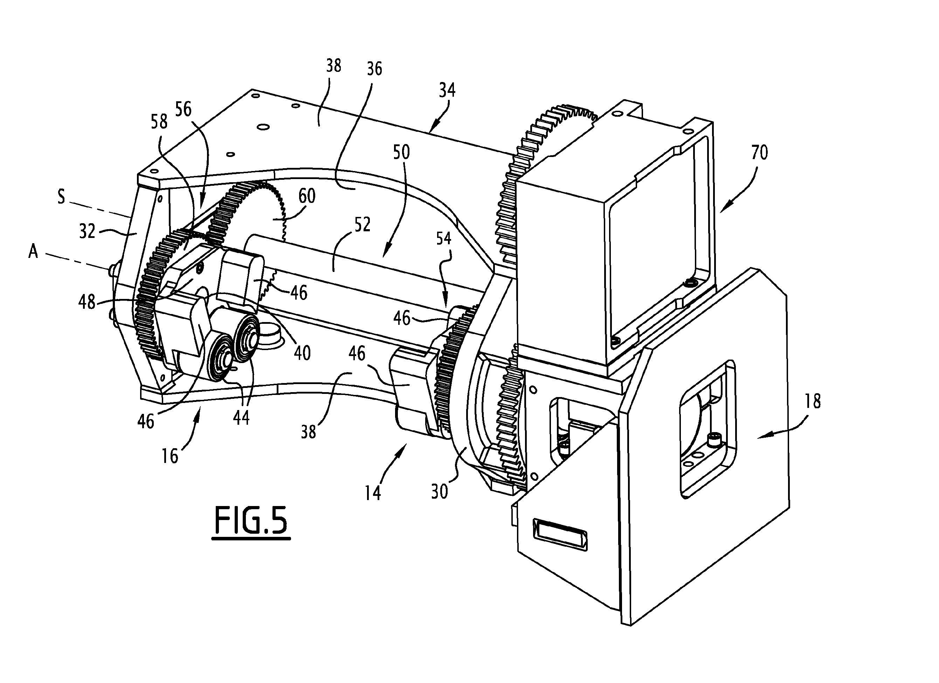

Comme visible sur les figures 4 et 5, chaque organe d'appui 14, 16 comprend une paire de galets d'appui 44 disposés côte à côte de manière à pouvoir poser un tourillon 12 en appui sur les deux galets d'appui 44 simultanément.

Les deux galets d'appui 44 de chaque organe d'appui 14, 16 sont disposés de part et d'autre d'un plan médian vertical passant par l'axe de retournement A. Chaque galet d'appui 44 est librement rotatif autour de son axe propre parallèle à l'axe de retournement A.

La distance entre l'axe propre de chaque galet d'appui 44 et l'axe de retournement A est sensiblement égale à la somme du rayon externe de chaque galet d'appui 44 et du rayon externe d'un tourillon 12. Il en résulte que l'axe propre d'un tourillon 12 en appui sur une paire de galet d'appui 44 d'un organe d'appui 14, 16 coïncide avec l'axe de retournement A.

Un tourillon 12 en appui sur les galets d'appui 44 d'un organe d'appui 14, 16 est librement rotatif autour de l'axe de retournement A. Il en résulte que le conteneur 4 en appui par ses tourillons 12 sur les organes d'appui 14, 16 est en appui simple librement rotatif sur les organes d'appui 14, 16.

Chaque organe d'appui 14, 16 comprend une paire de rampes de guidage 46 s'évasant vers le haut et convergeant vers le bas en direction des galets d'appui 44 pour guider les tourillons 12 d'un conteneur 4 vers les galets d'appui 44 lors de la dépose du conteneur 4 en appui sur les galets d'appui 44.

Chaque organe d'appui 14, 16 comprend une base de montage 48 portant les galets d'appui 44 et les rampes de guidage 46. La base de montage 48 du premier organe d'appui 14 est fixée à l'extrémité libre du tronçon distal 26 de l'arbre de support 22. La base de montage 48 du deuxième organe d'appui 16 est fixée sur le pivot 40.

En revenant à la figure 3, le dispositif de retournement 6 comprend un mécanisme d'immobilisation 50 propre à maintenir le deuxième organe d'appui 16, porté par l'organe de support mobile 20, immobile en rotation autour de l'axe de retournement A, lors de la rotation de l'organe de support mobile 20 autour de l'axe de retournement A.

Le mécanisme d'immobilisation 50 est porté au moins en partie par l'organe de support mobile 20. Il lie en rotation le deuxième organe d'appui 16 au premier organe d'appui 14 et/ou à l'organe de support fixe 18, de telle manière que le deuxième organe d'appui 16 reste immobile en rotation lors de la rotation de l'organe de support mobile 20.

Le mécanisme d'immobilisation 50 comprend un arbre de synchronisation 52 s'étendant suivant un axe de synchronisation S parallèle à l'axe de retournement A. L'arbre de synchronisation 52 est déporté par rapport à l'axe de retournement A. L'arbre de synchronisation 52 est porté par l'organe de support mobile 20 et monté rotatif autour de l'axe de synchronisation S sur l'organe de support mobile 20. L'arbre de synchronisation 52 s'étend entre la partie proximale 30 et la partie distale 32 de l'organe de support mobile 20. Les extrémités de l'arbre de synchronisation 52 sont montées rotatives l'une sur la partie proximale 30 et l'autre sur la partie distale 32.

L'arbre de synchronisation 52 est entraîné en rotation par l'intermédiaire d'une première liaison mécanique avec le premier organe d'appui 14 et par l'intermédiaire d'une deuxième liaison mécanique avec le deuxième organe d'appui 16. La première liaison mécanique est un premier engrenage de synchronisation 54 et la deuxième liaison mécanique est un deuxième engrenage de synchronisation 56.

Chacun du premier engrenage de synchronisation 54 et du deuxième engrenage de synchronisation 56 comprend une roue planétaire 58 d'axe l'axe de retournement A, et une roue satellite 60 d'axe l'axe de synchronisation S engrenant mutuellement.

Le premier engrenage de synchronisation 54 et le deuxième engrenage de synchronisation 56 possèdent le même rapport de réduction. Dans l'exemple illustré, les engrenages de synchronisation 54 et 56 possèdent un rapport de réduction de 1, la roue planétaire 58 et la roue satellite 60 de chaque engrenage de synchronisation 54, 56 étant de même diamètre nominal. En variante, les engrenages de synchronisation 54 et 56 possèdent un rapport de réduction inférieur à 1 ou supérieur à 1, la roue planétaire 58 et la roue satellite 60 de chaque engrenage de synchronisation 54, 56 étant de diamètres nominaux différents.

Les roues planétaires 58 des engrenages de synchronisation 54, 56 possèdent de préférence des dentures identiques et leurs roues satellite 60 des engrenages de synchronisation 54, 56 possèdent de préférence des dentures identiques.

La roue planétaire 58 du premier engrenage de synchronisation 54 est montée sur l'arbre de support 22, axialement entre le premier organe d'appui 14 et la partie proximale 30 de l'organe de support mobile 20, et est solidaire en rotation de l'arbre de support 22 et du premier organe d'appui 14.

La roue planétaire 58 du deuxième engrenage de synchronisation 56 est montée sur le pivot 40, axialement entre le deuxième organe d'appui 16 et la partie distale 32 de l'organe de support mobile 20, et est solidaire en rotation du pivot 40 et du deuxième organe d'appui 16. Les roues satellite 60 du premier engrenage de synchronisation 54 et du deuxième engrenage de synchronisation 56 sont liées en rotation par l'arbre de synchronisation 52. Chaque roue satellite 60 est montée à une extrémité respective de l'arbre de synchronisation 52 et solidaire en rotation de l'arbre de synchronisation 52.

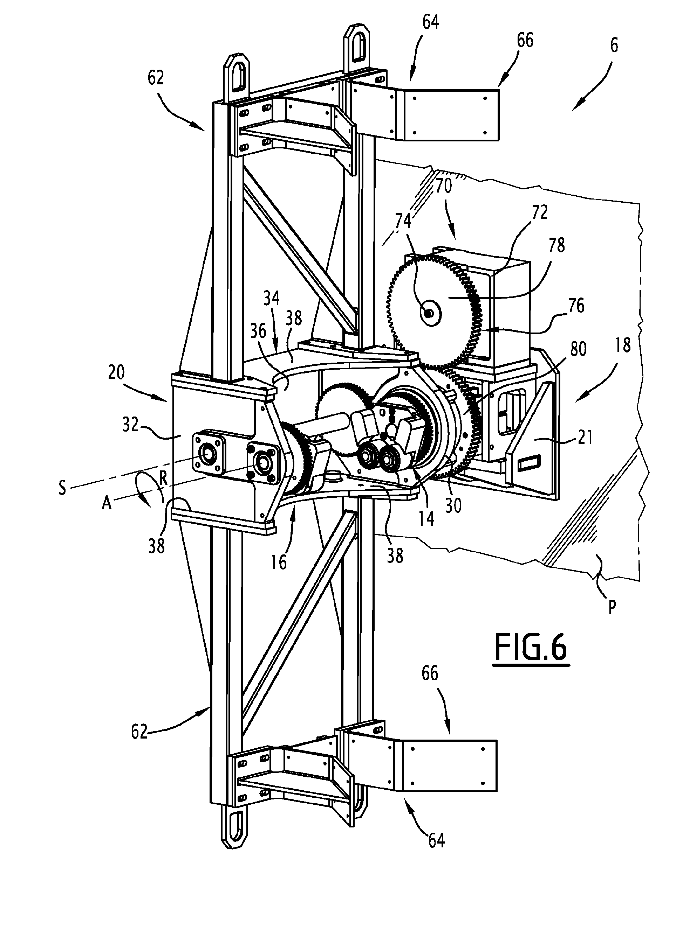

Tel qu'illustré sur la figure 6, le dispositif de retournement 6 comprend deux bras d'entraînement 62 fixés sur l'organe de support mobile 20 et s'étendant de part et d'autre de l'organe de support mobile 20 de façon à venir en appui sur les portions d'extrémité d'un conteneur 4 reçu par le dispositif de retournement 6.

Chaque bras d'entraînement 62 comprend une terminaison 64 comprenant un guide 66 en V convergeant suivant une direction d'insertion du conteneur pour guider les portions d'extrémités du conteneur 4 lors de sa dépose en appui sur les organes d'appui 14, 16.

Le dispositif de retournement 6 comprend un dispositif d'entraînement 70 pour l'entraînement en rotation de l'organe de support mobile 20 par rapport à l'organe de support fixe 18.

Le dispositif d'entraînement 70 comprend un moteur 72 dont l'arbre de sortie 74 est lié en rotation à la partie proximale 30 de l'organe de support mobile 20 par l'intermédiaire d'un engrenage d'entraînement 76 comprenant une roue menante 78 solidaire de l'arbre de sortie 74 et une roue menée 80 montée sur l'arbre de support 22 et solidaire en rotation de la partie proximale 30. Le moteur 72 est fixé sur le châssis 21. La roue menée 80 est disposée axialement le long de l'arbre de support 22 entre la partie proximale 30 et le châssis 21.

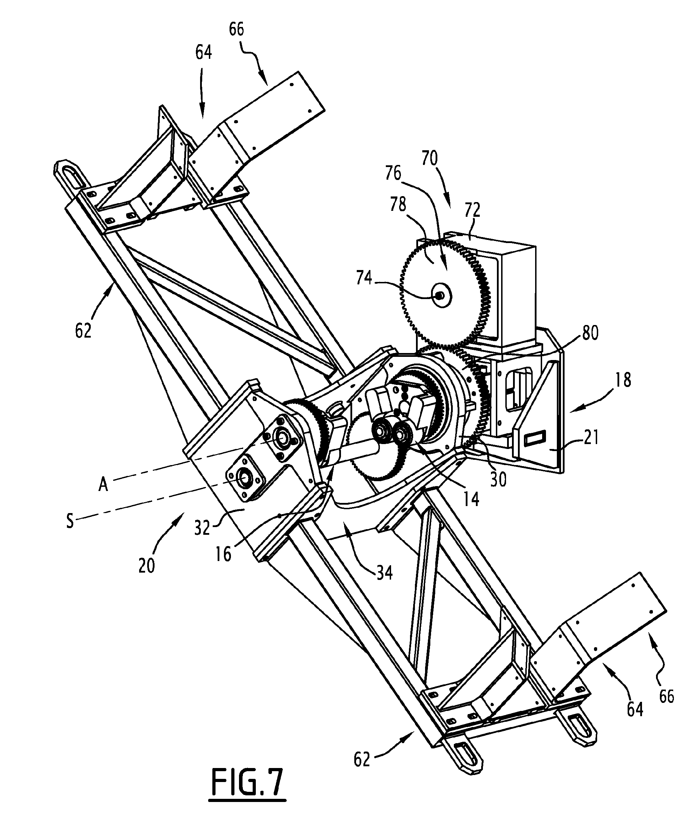

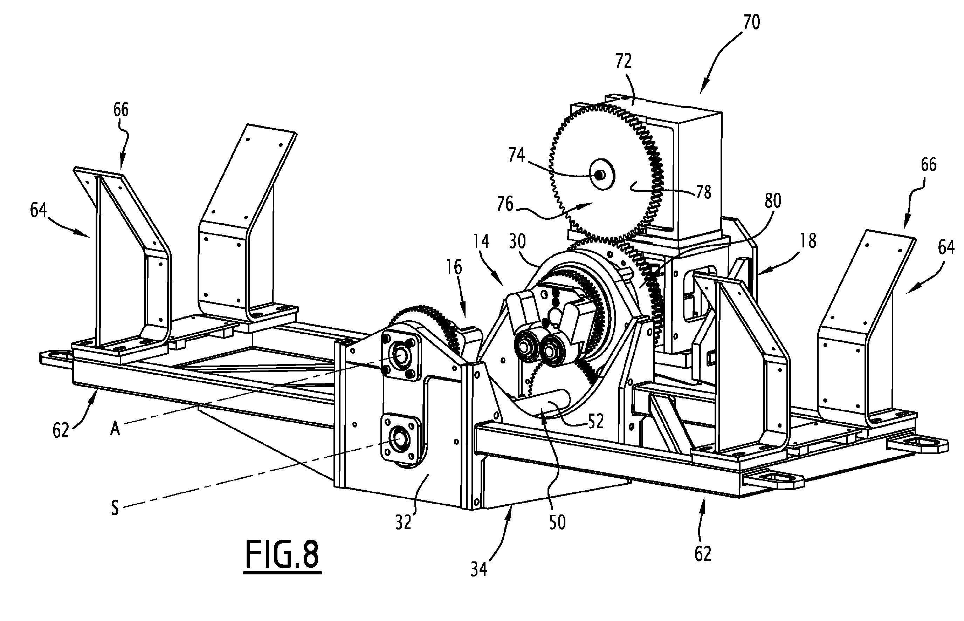

En fonctionnement, en référence aux figures 6 à 8, le moteur 72 entraîne l'organe de support mobile 20 en rotation autour de l'axe de retournement A par rapport à l'organe de support fixe 18.

Le mécanisme d'immobilisation 50 synchronise la rotation du premier organe d'appui 14 et du deuxième organe d'appui 16 à l'aide de l'organe de support mobile 20. En d'autres termes, quelle que soit la position de l'organe de support mobile 20, le premier organe d'appui 14 et le deuxième organe d'appui 16 conservent la même orientation par rapport à l'organe de support mobile 20. Par ailleurs, le premier organe d'appui 14 est maintenu immobile en rotation autour de l'axe de retournement A par rapport à l'organe de support fixe 18. Le premier organe d'appui 14 et le deuxième organe d'appui 16 restent donc immobiles en rotation par rapport à l'organe de support fixe 18.

Il en résulte que le deuxième organe d'appui 16 est porté par l'organe de support mobile 20 mais reste immobile en rotation autour de l'axe de retournement A par rapport à l'organe de support fixe 18, lors de la rotation de l'organe de support mobile 20 par rapport à l'organe de support fixe 18.

Le mécanisme d'immobilisation 50 définit un train épicycloïdal reliant le premier organe d'appui 14 au deuxième organe d'appui 16. L'arbre de synchronisation 52 et les deux roues satellites 60 définissent le satellite. L'organe de support mobile 20 définit le porte-satellite. Les roues planétaires 58 sont coaxiales et chacune solidaire d'un organe d'appui 14, 16 respectif. L'organe de support mobile 20 porte le deuxième organe d'appui 16.

La roue planétaire 58 solidaire du premier organe d'appui 14 est fixe. Le porte-satellite (organe de support mobile 20) est rotatif et les rapports de réduction entre le satellite (arbre de synchronisation 52 et roues satellites 60) et les deux roues planétaires 58 sont identiques. Il en résulte que la roue planétaire 58 solidaire du deuxième organe d'appui 16 est immobile en rotation autour de l'axe de retournement lors de la rotation du porte-satellite (organe de support mobile 20).

Lors de la rotation de l'organe de support mobile 20, l'arbre de synchronisation 52 effectue une révolution circulaire autour de l'axe de retournement A. Chaque roue satellite 60 suit la révolution circulaire autour de la roue planétaire 58 associée, tout en tournant autour de l'axe de synchronisation S du fait de l'engrènement de chaque roue satellite 60 avec la roue planétaire 58 correspondante.

Lors de la rotation de l'organe de support mobile 20, selon le sens de rotation, un bras d'entraînement 62 ou l'autre vient en appui sur le conteneur 4 et l'entraîne en rotation autour de l'axe de retournement A.

Les figures 6 à 8 illustrent le déplacement de l'organe de support mobile 20 sur 90°. Afin de permettre le retournement, l'organe de support mobile 20 tourne à au moins 180° autour de l'axe de retournement A. De préférence, le dispositif de retournement 6 permet le retournement de l'organe de support mobile 20 sur +/- 360° autour de l'axe de retournement A. L'organe de support mobile peut éventuellement faire plusieurs tours.

Selon l'invention, le deuxième organe d'appui 16 est porté par l'organe de support mobile 20 en porte-à-faux par rapport au premier organe d'appui 14 et à l'organe de support fixe 18, l'organe de support mobile 20 pouvant pivoter autour de l'axe de retournement A pour entraîner le conteneur 4 et l'accompagner lors de son retournement, le deuxième organe d'appui 16 restant immobile en rotation par rapport à l'organe de support fixe 18.

Le dispositif de retournement 6 est compact malgré la longueur du conteneur 4 (de l'ordre de 4 à 6 m). L'organe de support fixe 18 est disposé sur le côté du conteneur 4 reçu dans le dispositif de retournement 6 hors de la trajectoire du conteneur 4, et l'organe de support mobile 20 accompagne le mouvement du conteneur 4. L'organe de support fixe 18 et l'organe de support mobile 20 peuvent être prévus avec des dimensions réduites.

Le dispositif de retournement 6 est fixé sur une paroi latérale d'une piscine, l'organe de support mobile 20 s'étendant ainsi en porte-à-faux à partir de la paroi latérale.

Le dispositif de retournement 6 ne monopolise pas un pont roulant. Le pont roulant équipant les installations nucléaires reste donc disponible pour d'autres opérations pouvant être effectuées simultanément aux opérations de retournement du dispositif de retournement 6. Le dispositif de retournement 6 fixé sur une paroi latérale ne nécessite pas une structure de support sur un fond de la piscine induisant une emprise élevée.

Le dispositif de retournement 6 permet d'effectuer des retournements sur le côté de la piscine à l'écart des cellules de stockage temporaire d'assemblages de combustible nucléaire. Il n'est donc pas nécessaire de vider de telles cellules.

Le dispositif de retournement 6 est simple d'utilisation. Le conteneur 4 est posé en appui simple sur les organes d'appui 14, 16. La rotation de l'organe de support mobile 20 entraîne la rotation du conteneur 4.

Le dispositif de retournement 6 est simple et fiable. L'immobilisation en rotation du deuxième organe d'appui 16 porté par l'organe de support mobile 20 est obtenue grâce à un mécanisme d'immobilisation 50 simple comprenant des engrenages et un arbre de synchronisation 52.

L'invention n'est pas limitée au mode de réalisation décrit, d'autres modes de réalisation étant envisageables. Par exemple, il est possible de remplacer les engrenages de synchronisation par des transmissions à courroies ou à chaînes.

Ainsi, l'immobilisation est obtenue de manière générale par un mécanisme à mouvement épicycloïdal comprenant un élément satellite monté rotatif autour d'un axe de synchronisation S sur l'organe de support mobile, entraîné en révolution autour de l'axe de retournement A du fait de la rotation de l'organe de support mobile, et entraîné en rotation autour de l'axe de synchronisation S par liaison mécanique (engrenage, courroie, chaîne) avec un élément planétaire d'axe l'axe retournement A solidaire de chaque organe d'appui, au moins un organe d'appui et l'élément planétaire associé étant montés rotatifs sur l'organe de support mobile, de telle sorte que le ou chaque organe d'appui porté par l'organe de support mobile reste immobile lors de la rotation de l'organe de support mobile.

L'invention s'applique au retournement d'assemblages de combustible nucléaire du type pour réacteur à eau légère, et de manière générale de tout type d'assemblage de combustible nucléaire. Dans ce cas, la structure est réalisée en matière de qualité nucléaire telle que de l'acier inoxydable type AISI 304 ou 316, de préférence bas carbone.

L'invention est également applicable à d'autres secteurs d'activité dans des univers industriels très variés, pour le retournement d'un conteneur destiné à recevoir tout type de contenu.

Ainsi, de manière générale, l'invention concerne un dispositif de retournement d'un conteneur, comprenant un organe de support fixe, deux organes d'appui espacés suivant l'axe de retournement de part et d'autre d'un espace de réception du conteneur et propres à servir d'appui au conteneur, par exemple à deux tourillons coaxiaux du conteneur, tout en permettant la rotation du conteneur par rapport aux organes d'appui autour de l'axe de retournement du dispositif de retournement. Le dispositif de retournement comprend un organe de support mobile monté rotatif sur l'organe de support fixe autour de l'axe de retournement, au moins un organe d'appui étant porté par l'organe de support mobile en étant monté rotatif autour de l'axe d'entraînement sur l'organe de support mobile, le ou chaque organe d'appui porté par l'organe de support mobile restant immobile en rotation autour de l'axe de retournement par rapport à l'organe de support fixe lors de la rotation de l'organe de support mobile autour de l'axe de retournement par rapport à l'organe de support fixe.

## Revendications

1. Dispositif de retournement (6) d'un conteneur (4) autour d'un axe de retournement (A), du type comprenant un organe de support fixe (18), deux organes d'appui (14, 16) espacés suivant l'axe de retournement (A) de part et d'autre d'un espace de réception du conteneur (4) et propres à servir d'appui au conteneur (4) tout en permettant la rotation du conteneur par rapport aux organes d'appui (14, 16) autour de l'axe de retournement (A),
**caractérisé en ce qu'**il comprend un organe de support mobile (20) monté rotatif sur l'organe de support fixe (18) autour de l'axe de retournement (A), au moins un organe d'appui (14, 16) étant porté par l'organe de support mobile (20) en étant monté rotatif autour de l'axe de retournement (A) sur l'organe de support mobile (20), le ou chaque organe d'appui (14, 16) porté par l'organe de support mobile (20) restant immobile en rotation autour de l'axe de retournement (A) par rapport à l'organe de support fixe (18) lors de la rotation de l'organe de support mobile (20) autour de l'axe de retournement (A) par rapport à l'organe de support fixe (18).

2. Dispositif de retournement selon la revendication 1, comprenant un mécanisme d'immobilisation (50) propre à maintenir le ou chaque organe d'appui (14, 16) monté sur l'organe de support mobile (20) immobile en rotation autour de l'axe de retournement (A) lors de la rotation de l'organe de support mobile (20) autour de l'axe de retournement (A) par rapport à l'organe de support fixe (18).

3. Dispositif de retournement selon la revendication 2, dans lequel le mécanisme d'immobilisation (50) est porté au moins en partie par l'organe de support mobile (20).

4. Dispositif de retournement selon la revendication 2 ou 3, dans lequel le mécanisme d'immobilisation (50) comprend un arbre de synchronisation (52) monté rotatif sur l'organe de support mobile (20) autour d'un axe de synchronisation (S) parallèle à l'axe de retournement (A), l'arbre de synchronisation (52) étant entraîné en révolution circulaire autour de l'axe de retournement (A) du fait de la rotation de l'organe de support mobile (20) et entraîné en rotation autour de son axe par une liaison mécanique (54, 56) avec chaque organe d'appui (14, 16).

5. Dispositif de retournement selon la revendication 4, dans lequel chaque liaison mécanique comprend un engrenage de synchronisation (54, 56) comprenant une roue planétaire (58) d'axe l'axe de retournement (A) solidaire en rotation de l'organe d'appui (14, 16) et une roue satellite (60), les roues satellites (60) des deux engrenages de synchronisation (54, 56) étant liées en rotation par l'arbre de synchronisation (52).

6. Dispositif de retournement selon la revendication 5, dans lequel la roue satellite (60) de chaque engrenage de synchronisation (54, 56) est montée sur l'arbre de synchronisation (52) et solidaire en rotation de l'arbre de synchronisation (52).

7. Dispositif de retournement selon l'une quelconque des revendications précédentes, dans lequel l'organe de support mobile (20) est rotatif par rapport à l'organe de support fixe (18) autour de l'axe de retournement (A) sur 360°.

8. Dispositif de retournement selon l'une quelconque des revendications précédentes, dans lequel l'organe de support mobile (20) porte un organe d'appui (14, 16) en porte-à-faux par rapport à l'autre organe d'appui (14, 16), l'autre organe d'appui (14, 16) étant situé entre l'organe d'appui porté en porte-à-faux par l'organe de support mobile (20) et l'organe de support fixe (18).

9. Dispositif de retournement selon la revendication 8, dans lequel l'organe de support mobile (20) comprend une partie proximale (30) et une partie distale (32) espacées suivant l'axe de retournement (A) et situées de part et d'autre de l'espace de réception, la partie proximale (30) est montée rotative sur l'organe de support fixe (18) autour de l'axe d'entraînement (A), et la partie distale (32) est en porte-à-faux et porte l'organe d'appui (14, 16).

10. Dispositif de retournement selon l'une quelconque des revendications précédentes, dans lequel un organe d'appui (14, 16) est fixé sur l'organe de support fixe (18).

11. Dispositif de retournement selon l'une quelconque des revendications précédentes, dans lequel l'organe de support fixe (18) comprend un arbre de support (22) fixe s'étendant suivant l'axe de retournement (A), un organe d'appui (14) étant fixé à une extrémité de l'arbre de support (22) fixe.

12. Dispositif de retournement selon la revendication 11, dans lequel l'organe de support mobile (20) est monté rotatif sur l'arbre de support (22).

13. Dispositif de retournement selon l'une quelconque des revendications précédentes, comprenant au moins un bras d'entraînement (62) en rotation d'un conteneur (4) reçu en appui sur les organes d'appui (14, 16), solidaire de l'organe de support mobile (20).

14. Dispositif de retournement selon l'une quelconque des revendications précédentes, propre à retourner un conteneur d'assemblage de combustible nucléaire.

15. Dispositif de retournement selon l'une quelconque des revendications précédentes, propre à fonctionner sous eau.

16. Ensemble de retournement comprenant un conteneur (4) d'assemblage de combustible nucléaire et un dispositif de retournement (6) du conteneur (4) selon l'une quelconque des revendications précédentes.

17. Centrale nucléaire de production d'énergie comprenant un ensemble de retournement selon la revendication 16.

## Patentansprüche

1. Vorrichtung zum Umdrehen (6) eines Behälters (4) um eine Umdrehachse (A), des Typs aufweisend ein feststehendes Stützorgan (18), zwei Auflageorgane (14, 16), die entlang der Umdrehachse (A) im Abstand zueinander sind um einen Raum zur Aufnahme des Behälters (4) und die geeignet sind, um als Auflage für den Behälter (4) zu dienen, wobei die Rotation des Behälters bezüglich der Auflageorgane (14, 16) um die Umdrehachse (A) ermöglicht ist,
**dadurch gekennzeichnet, dass** sie aufweist ein bewegbares Halteorgan (20), das an dem feststehenden Stützorgan (18) um die Umdrehachse (A) drehbar montiert ist, wobei wenigstens ein Auflageorgan (14, 16) von dem bewegbaren Halteorgan (20) getragen wird, wobei es um die Umdrehachse (A) drehbar an dem bewegbaren Halteorgan (20) montiert ist, wobei das oder jedes Auflageorgan (14, 16), das von dem bewegbaren Halteorgan (20) getragen wird, bezüglich des feststehenden Stützorgans (18) um die Umdrehachse (A) drehbewegungslos bleibt während der Drehung des bewegbaren Halteorgans (20) um die Umdrehachse (A) bezüglich des feststehenden Stützorgans (18).

2. Vorrichtung zum Umdrehen gemäß Anspruch 1, aufweisend einen Verriegelungsmechanismus (50), der in der Lage ist, das oder jedes Auflageorgan (14, 16), das an dem bewegbaren Halteorgan (20) montiert ist, um die Umdrehachse (A) drehbewegungslos zu halten während der Drehung des bewegbaren Organs (20) um die Umdrehachse (A) bezüglich des feststehenden Stützorgans (18).

3. Vorrichtung zum Umdrehen gemäß Anspruch 2, wobei der Verriegelungsmechanismus (50) zumindest teilweise von dem bewegbaren Halteorgan (20) getragen wird.

4. Vorrichtung zum Umdrehen gemäß Anspruch 2 oder 3, wobei der Verriegelungsmechanismus (50) eine Synchronisationswelle (52) aufweist, die um eine Synchronisationsachse (S), die zu der Umdrehachse (A) parallel ist, drehbar an dem bewegbaren Halteorgan (20) montiert ist, wobei die Synchronisationswelle (52) um die Umdrehachse (A) kreisumlaufend angetrieben ist durch die Rotation des bewegbaren Halteorgans (20) und um ihre Achse drehgetrieben ist durch eine mechanische Verbindung (54, 56) mit jedem Auflageorgan (14, 16).

5. Vorrichtung zum Umdrehen gemäß Anspruch 4, wobei jede mechanische Verbindung ein Synchronisationsgetriebe (54, 56) aufweist, das aufweist ein Planetenrad (58), das die Umdrehachse (A) als Achse hat und das mit dem Auflageorgan (14, 16) drehfest ist, und ein Satellitenrad (60), wobei die Satellitenräder (60) der beiden Synchronisationsgetriebe (54, 56) über die Synchronisationswelle (52) miteinander drehverbunden sind.

6. Vorrichtung zum Umdrehen gemäß Anspruch 5, wobei das Satellitenrad (60) jedes Synchronisationsgetriebes (54, 56) auf die Synchronisationswelle (52) montiert ist und mit der Synchronisationswelle (52) drehfest ist.

7. Vorrichtung zum Umdrehen gemäß irgendeinem der vorhergehenden Ansprüche, wobei das bewegbare Halteorgan (20) um die Umdrehachse (A) bezüglich des feststehenden Stützorgans (18) um 360° drehbar ist.

8. Vorrichtung zum Umdrehen gemäß irgendeinem der vorhergehenden Ansprüche, wobei das bewegbare Halteorgan (20) ein Auflageorgan (14, 16) freivorbauend bezüglich des anderen Auflageorgans (14, 16) trägt, wobei das andere Auflageorgan (14, 16) zwischen dem Auflageorgan, das freivorbauend von dem bewegbaren Halteorgan (20) getragen wird, und dem feststehenden Stützorgan (18) angeordnet ist.

9. Vorrichtung zum Umdrehen gemäß Anspruch 8, wobei das bewegbare Halteorgan (20) einen proximalen Teil (30) und einen distalen Teil (32) aufweist, die entlang der Umdrehachse (A) angeordnet sind und die beidseits des Raums zur Aufnahme angeordnet sind, wobei der proximale Teil (30) um die Antriebsachse (A) drehbar an dem feststehenden Stützorgan (18) montiert ist, und wobei der distale Teil (32) freivorbauend ist und das Auflageorgan (14, 16) trägt.

10. Vorrichtung zum Umdrehen gemäß irgendeinem der vorhergehenden Ansprüche, wobei ein Auflageorgan (14, 16) an dem feststehenden Stützorgan (18) befestigt ist.

11. Vorrichtung zum Umdrehen gemäß irgendeinem der vorhergehenden Ansprüche, wobei das feststehende Organ (18) einen feststehenden Stützschaft (22) aufweist, der sich entlang der Umdrehachse (A) erstreckt, wobei ein Auflageorgan (14) an einem Ende des feststehenden Stützschafts (22) befestigt ist.

12. Vorrichtung zum Umdrehen gemäß Anspruch 11, wobei das bewegbare Halteorgan (20) drehbar an dem Stützschaft (22) montiert ist.

13. Vorrichtung gemäß irgendeinem der vorhergehenden Ansprüche, aufweisend wenigstens einen Arm (62) zum drehenden Antreiben eines Behälters (4), der in Auflage auf den Auflageorganen (14, 16) aufgenommenen ist, welcher Arm mit dem bewegbaren Halteorgan (20) fest verbunden ist.

14. Vorrichtung zum Umdrehen gemäß irgendeinem der vorhergehenden Ansprüche, die geeignet ist, einen Nuklearer-Brennstoff-Anordnung-Behälter umzudrehen.

15. Vorrichtung gemäß irgendeinem der vorhergehenden Ansprüche, die geeignet ist unter Wasser zu funktionieren.

16. Einrichtung zum Umdrehen, aufweisend einen Nuklearer-Brennstoff-Anordnung-Behälter (4) und eine Vorrichtung zum Umdrehen (6) des Behälters (4) gemäß irgendeinem der vorhergehenden Ansprüche.

17. Energieproduktions-Kernkraftwerk mit einer Einrichtung zum Umdrehen gemäß Anspruch 16.

## Claims

1. Device for turning (6) a container (4) about a turning axis (A), of the type comprising a stationary holding member (18), two bearing members (14, 16) which are spaced apart along the turning axis (A) on each side of a space for receiving the container (4) and which are capable of being used for bearing on the container (4) while enabling the rotation of the container about the turning axis (A) relative to the bearing members (14, 16),
**characterised in that** it comprises of a movable holding member (20) that is mounted on to the stationary holding member (18) so as to be rotatable around the turning axis (A), at least one bearing member (14, 16) being supported by the movable holding member (20) while being pivotally mounted onto the movable holding member (20) so as to rotate about the turning axis (A), the or each bearing member (14, 16) supported by the movable holding member (20) not rotating about the turning axis (A) relative to the stationary holding member (18) when the movable holding member (20) rotates about the turning axis (A) relative to the stationary holding member (18).

2. Turning device according to claim 1, comprising of an immobilizing mechanism (50) capable of holding the or each bearing member (14, 16) mounted on said movable holding member (20) so as to prevent it rotating around the turning axis (A) when the movable holding member (20) is rotating about the turning axis (A) relative to the stationary holding member (18).

3. Turning device according to claim 2, wherein the immobilizing mechanism (50) is supported at least in part by the movable holding member (20).

4. Turning device according to Claim 2 or 3, wherein the immobilizing mechanism (50) comprises a synchronising shaft (52) pivotally mounted on the movable holding member (20) so as to be rotatable about a synchronisation axis (S) parallel to the turning axis (A), the synchronising shaft (52) being driven to revolve circularly about the turning axis (A) due to the rotation of the movable holding member (20) and driven to rotate about its axis by a mechanical linkage (54, 56) with each bearing member (14, 16).

5. Turning device according to claim 4, wherein each mechanical linkage comprises a synchronising gear (54, 56) comprising a planet wheel (58) with axis being the turning axis (A) and in fixed rotational connection with the bearing member (14, 16) and a satellite wheel (60), the satellite wheels (60) of the two synchronising gears (54, 56) being connected in rotation by the synchronising shaft (52).

6. Turning device according to claim 5, wherein the satellite wheel (60) of each synchronising gear (54, 56) is mounted on the synchronising shaft (52) and is in fixed rotational connection with the synchronising shaft (52).

7. Turning device according to any one of the preceding claims, wherein the movable holding member (20) is rotatable through 360° about the turning axis (A) relative to the stationary holding member (18).

8. Turning device according to any one of the preceding claims, wherein the movable holding member (20) supports one bearing member (14, 16) in cantilevered overhang position relative to the other bearing member (14, 16), the other bearing member (14, 16) being located between the bearing member supported in cantilevered overhang position by the movable holding member (20) and the stationary holding member (18).

9. Turning device according to claim 8, wherein the movable holding member (20) comprises a proximal portion (30) and a distal portion (32) spaced apart along the turning axis (A) and located on each side of the receiving space, the proximal portion (30) is mounted on the stationary holding member (18) so as to be rotatable about the drive axis (A), and the distal portion (32) is in cantilevered overhang position and supports the bearing member (14, 16).

10. Turning device according to any one of the preceding claims, wherein a bearing member (14, 16) is fixed to the stationary holding member (18).

11. Turning device according to any one of the preceding claims, wherein the stationary holding member (18) comprises a stationary support shaft (22) extending along the turning axis (A), a bearing member (14) being fixed to one end of the stationary support shaft (22).

12. Turning device according to claim 11, wherein the movable holding member (20) is mounted so as to rotate on the support shaft (22).

13. Turning device according to any one of the preceding claims, comprising at least one rotating drive arm (62) of a container (4) received so as to be supported on the bearing members (14, 16), integrally attached to the movable holding member (20).

14. Turning device according to any one of the preceding claims, capable of turning a nuclear fuel assembly container.

15. Turning device according to any one of the preceding claims, capable of being operated under water.

16. Turning assembly comprising of a nuclear fuel assembly container (4) and a device for turning (6) the container (4) according to any one of the preceding claims.

17. Nuclear power generating plant comprising a turning assembly according to Claim 16.
